# EUROPÄISCHE PATENTSCHRIFT

(11) **EP 1 392 946 B1**
(45) Veröffentlichungstag und Bekanntmachung des Hinweises auf die Patenterteilung: **30.05.2007**
(21) Anmeldenummer: 01903726.6
(22) Anmeldetag: 09.02.2001
(51) Int. Cl.: E05D 15/02, E05B 65/00, E06B 3/90

(54) **SICHERUNGSVORRICHTUNG GEGEN UNGEWOLLTES AUSLENKEN EINES TÜRFLÜGELS**
DEVICE FOR SECURING A DOOR LEAF AGAINST UNINTENTIONAL DEFLECTION
DISPOSITIF DE SECURITE CONTRE LA DEFLEXION NON INTENTIONNELLE D'UN BATTANT DE PORTE

(43) Veröffentlichungstag der Anmeldung: 03.03.2004
(73) Patentinhaber: DORMA GmbH + Co. KG, 58256 Ennepetal (DE)
(72) Erfinder: ROCKENBACH, Manfred, 50226 Frechen (DE)
(86) Internationale Anmeldenummer: PCT/EP2001/001417
(87) Internationale Veröffentlichungsnummer: WO 2002/064924

(56) Entgegenhaltungen:
- DE-U- 29 905 967
- US-A- 2 523 980
- US-A- 4 562 665
- US-A- 4 970 825
- US-A- 6 135 515

## Beschreibung

Die Erfindung betrifft eine Vorrichtung zur Sicherung der Türflügel einer mindestens einflügeligen Türanlage gegen ungewolltes Auslenken gemäß dem Oberbegriff des Patentanspruchs 1, die in Flucht- und Rettungswegen verwendet wird.

So weisen z. B. Karusselltüren bekanntlich um eine zentrale Achse drehbare Türflügel auf, die sich zwischen dem zentralen säulenförmigen Antriebsbauteil und den zylindersegmentförmigen Begrenzungswänden der Karusselltür erstrecken und an ersterem schwenkbar gelagert sind, um diese aus der normalen zu den Begrenzungswänden radial ausgerichteten Betriebslage für den Drehbetrieb der Karusselltür in eine bei Stillstand der Karusselltür einen Durchgangsbereich freigebende Öffnungslage unter Überwindung einer Haltekraft verschwenken zu können.

Auf diese Weise wird ein Rettungs- und Fluchtweg frei, der den ungehinderten Durchgang durch die Karusselltür ermöglicht.

Eine solche Ausbildung ermöglicht ferner insbesondere in der Sommerzeit auch ein Öffnen der Karusselltür ohne Drehbetrieb.

Eine vergleichbare Situation ergibt sich bei Schiebetüranlagen. Um die Schiebetüren aus der normalen zu den feststehenden Seitenwänden in einer parallelen Ebene angeordneten Lage in eine im Notfall den Durchgang freigebende Öffnungslage zu verschwenken, muss eine definierte Haltekraft überwunden werden.

Die gewollt freigebbare Schwenklagerung solcher Türflügel ist problematisch, da einerseits die Türflügel für den Drehbetrieb in der Normallagein der sie beispielsweise im Querschnitt ein X bilden - zu halten sind und andererseits bei unterbrochenem Drehbetrieb entweder gewollt wegschwenkbar oder nach Überwindung der vorgegebenen Haltekraft in die den Rettungs- und Fluchtweg freigebende Lage von der Hand verschwenkbar sein müssen. Da die Abmessungen solcher Türanlagen und damit auch die Türflügel relativ groß sind, müssen für den Normalbetrieb die an der Tür auftretenden Kräfte berücksichtigt werden.

Wie die Erfahrung gezeigt hat, sind die Haltekräfte zur Überwindung des Winddruckes wesentlich höher als die für das Öffnen der Türflügel im Panikfall zulässigen Kräfte. Da die Lage der Türflügel für Steuerungszwecke in aller Regel abgetastet wird, verursachen ungewollte von der Normallage abweichende Schwenklagen der Türflügel Störungen im Normalbetrieb der Tür, was zum Stillstand der Türbewegung führt. Die Türflügel sind also trotz der auftretenden Kräfte stets in ihrer Normallage zu halten; aus der sie aber im Panikfall wegschwenkbar sein müssen.

Hierzu ist gemäß der DE 40 36 881 C2 eine sogenannte Sturmsicherung bekannt, bei welcher eine um die zentrale Achse der Karusselltür drehbare Anschlageinrichtung mit einer teilelastischen verschwenkbaren Halteeinrichtung in Eingriff bringbar ist und dadurch ein Veschwenken der Türflügel verhindert, bis eine von der Anschlageinrichtung auf die Halteeinrichtung wirkende vorbestimmte Kraft eine solche Größe erreicht hat, dass sich zumindest ein Teil der Halteeinrichtung von der Anschlageinrichtung wegschwenkt, um ein Verschwenken der Türflügel zu ermöglichen.

Die Haltevorrichtung weist als Nocken ausgebildete Anschlagpunkte auf, mit denen eine Laufrolle zusammenwirkt, die von einem federnden Viergelenk getragen ist, dessen Federkraft einstellbar und über einen Elektromagneten verriegelbar ist.

Der bauliche Aufwand einer solchen Einrichtung ist groß, Montage und richtige Einstellung der Federkräfte sind kompliziert, insbesondere aber ist infolge der federnden Vorspannung des Viergelenkes dessen Sperrwirkung trotz im Wirkzustand befindlichen Elektromagneten durch stoßartige Kraftimpulse aufhebbar. Ein störungsfreier Betrieb einer solchen Karusselltür ist daher nicht möglich.

Es sind auch Arretiervorrichtungen zum Festhalten der Türflügel von Karusselltüren bekannt, die für jeden Türflügel einen Antrieb umfassen, durch den der Türflügel gegen einen von einem elektromagnetischen Haltemagneten betätigbaren Anschlag bewegt und dadurch festgehalten wird; vgl. DE 44 42 191 A1.

Auch eine solche Ausbildung ist überaus aufwendig im Aufbau und in der Montage, da für jeden Türflügel ein z. B. als Türschließer ausgebildeter Antrieb vorzusehen ist, der mit ausreichendem Drehmoment den jeweiligen Türflügel an dem steuerbaren Anschlag in Anlage halten muss, wobei zur Verbesserung der Haltekraft auch Haltemagnete vorgesehen werden können.

Darüber hinaus wirken solche Türschließer drehsinnabhängig, so dass für jeden Türflügel zusätzliche Rückstellantriebe vorgesehen werden müssen, was den Aufbau solcher Karusselltüren zusätzlich erschwert und verteuert.

Des weiteren ist aus der DE 90 00 881 U1 eine Dämpf- und Haltevorrichtung mit einem elektrischen Haltemagneten und einer Wirbelstrombremse bekannt, die in Antrieben für Türen und Tore verwendet werden kann.

Schließlich sind auch über Linearmotoren betätigbare Riegelfallen als Sicherungsvorrichtungen für die Türflügel einer Karusselltür bekannt; vgl. EP 0340771.

Die US 4,970,825 beschreibt eine Karusselltür mit einer Vorrichtung, mit derbei einem stromlosen Magneten - die einzelnen Türflügel in eine Fluchtposition verschwenkt werden können. Hierzu wird ein mechanisches Gesperre verwendet.

Infolge ihres hohen elektromechanischen Aufwandes haben sich aber solche Vorrichtungen in der Praxis nicht einführen können.

Der Erfindung liegt die Aufgabe zugrunde, die bekannten Vorrichtungen zur Sicherung der Türflügel einer Türanlage gegen unbeabsichtigtes Verschwenken, insbesondere durch Winddruck, zu vereinfachen, um die Betriebssicherheit und die Lebensdauer zu erhöhen.

Diese Aufgabe ist erfindungsgemäß durch die Merkmale des Patentanspruches 1 gelöst.

Weitere Merkmale der Erfindung ergeben sich aus den Unteransprüchen.

Die Ausbildung der Mittel zur Fixierung der Türflügel in ihrer normalen Betriebsstellung durch jeweils ein Gesperre bestehend aus einem dem Türflügel zugeordneten Zapfen und einem gestellfest drehbeweglich gelagerten Gabelarm, der in der Normal- oder Arbeitslage den Haltezapfen umfasst, beim Ausschwenken vorzugsweise nach ± 30 ° den Haltezapfen aber freigibt, und einer dem Gabelarm zugeordneten Magnetbremse zur Erzeugung des notwendigen Haltemomentes in der Normal- oder Arbeitslage des Gabelarmes ist äußerst wirksam und zuverlässig, da die Festlegung des dem Türflügel zugeordneten Haltezapfens als Teil eines Gesperres formschlüssig ohne jede Federwirkung erfolgt.

Darüber hinaus läßt sich die über die Magnetbremse erzeugte Haltekraft relativ einfach auf die jeweiligen Betriebsverhältnisse einstellen.

Durch die Anordnung der Magnetbremse auf einem Bolzen zwischen Gabelarm und -halterung unter Einbeziehung der Mittel zur drehbeweglichen Lagerung des Bolzens an der Deckenkonstruktion der Türanlage ergibt sich eine konstruktive kompakte wenig Raum beanspruchende, insbesondere leichte Vorrichtung zur Sicherung der Türflügel. Dies ist von wesentlichem Vorteil nicht nur hinsichtlich der Kosten sondern auch hinsichtlich der Montage, dem Betrieb und dem Service solcher Karusselltüren.

Über einen die Schaltstellung der Rastglieder abtastenden Schalter ist die jeweilige Lage der Türflügel einer die Funktion der Türanlage steuernden Schaltungsanordnung übermittelbar.

Ein weiterer Vorteil ist darin zu sehen, dass beim Lösen der Magnetbrem-se, also im stromlosen Zustand, der zugehörige Türflügel leichtgängig ohne großen Kraftaufwand verschwenkbar ist. Beim Zurückschwenken des jeweiligen Türflügels in die Normalstellung des Haltezapfens greift dieser leicht und sicher in den Gabelarm ein und nimmt dabei den Gabelarm und damit auch die Gabelhalterung in die Normallage mit. Die Einstellung der unterschiedlichen Kräfte bezüglich Aufnahme des Winddruckes und der Einhaltung der zulässigen Kraft für das Öffnen der Türflügel im Panikfall, ist also sicher, zuverlässig und jederzeit reproduzierbar durchzuführen.

In einer bevorzugten Ausführungsform erfolgt das Zurückschwenken des jeweiligen Türflügels in die Normalstellung automatisch. Hierzu eignen sich insbesondere elektrische, mechanische, pneumatische oder hydraulische Speicher, die beim Ausschwenken aufgeladen werden. Denkbar sind außerdem separat ansteuerbare Antriebsmittel.

Die Erfindung ist nachfolgend anhand eines in den Zeichnungen dargestellten Ausführungsbeispieles einer Karusselltür beschrieben.

Im Einzelnen zeigt:
- Figur 1:: Einen Schnitt durch eine an der oberen Kante des Türflügelrahmens eines Türflügels einer Karusselltür gegenüberliegend angeordneten Haltevorrichtung gemäß der Erfindung.
- Figur 2:: Eine Draufsicht auf die Haltevorrichtung nach Fig. 1 in der Normallage.
- Figur 3:: Ein Funktionsschema der Haltevorrichtung nach Fig. 1.

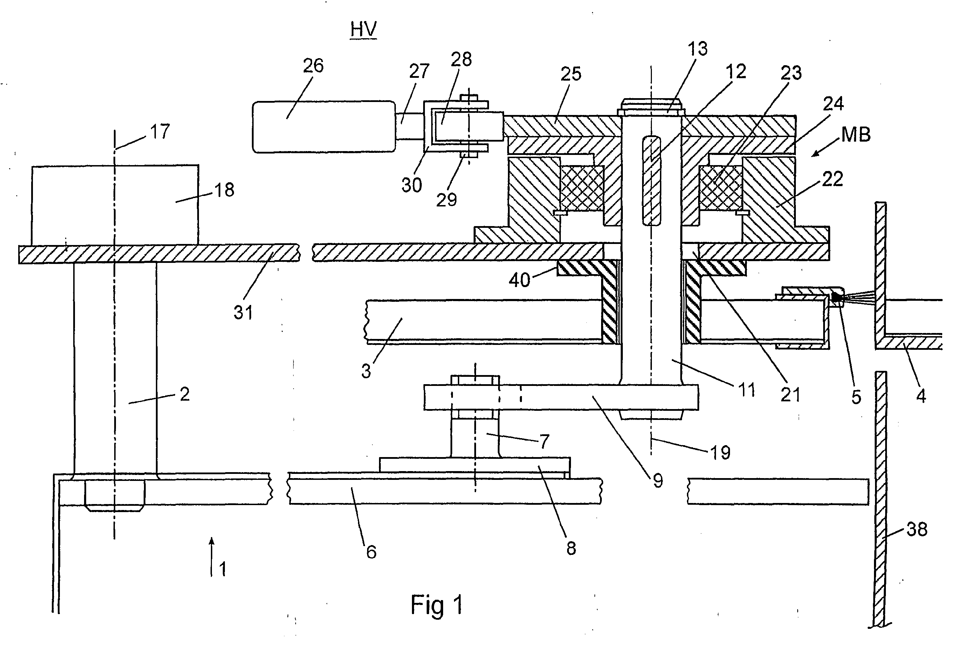

Jedem Türflügel 1 einer im einzelnen nicht dargestellten an sich bekannten mehrflügeligen Karusselltür, innerhalb von Begrenzungswänden 38, ist dem oberen Bereich eines Flügelrahmens 6 gegenüberliegend eine in Fig. 1 insgesamt mit HV bezeichnete Haltevorrichtung zugeordnet. Jeder Türflügel 1 ist mittels einen Teil einer Flügellagerung 18 bildenden Flügelaufhängung 2 um eine Achse 17 schwenkbar gelagert. Die Flügellagerungen 18 befinden sich an der mit der Karusselltür umlaufenden Deckenkonstruktion 31, welche von einer ebenfalls mitumlaufenden sich zwischen einer zylindermantelförmigen Begrenzung 4 erstreckenden Decke 3 abgedeckt ist.

Zwischen Decke 3 und Begrenzung 4 ist rundum eine Bürstenabdichtung 5 vorgesehen.

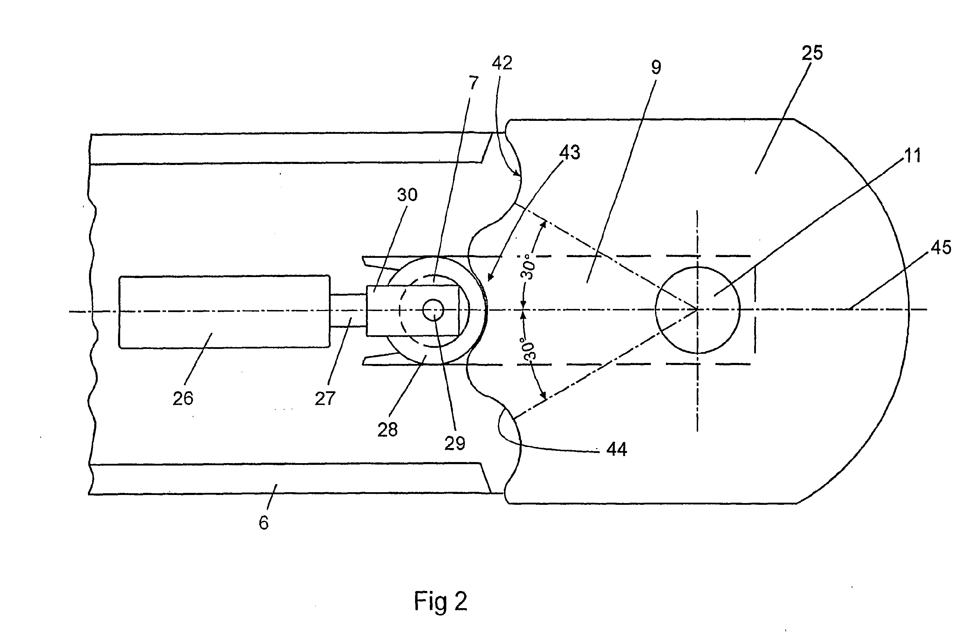

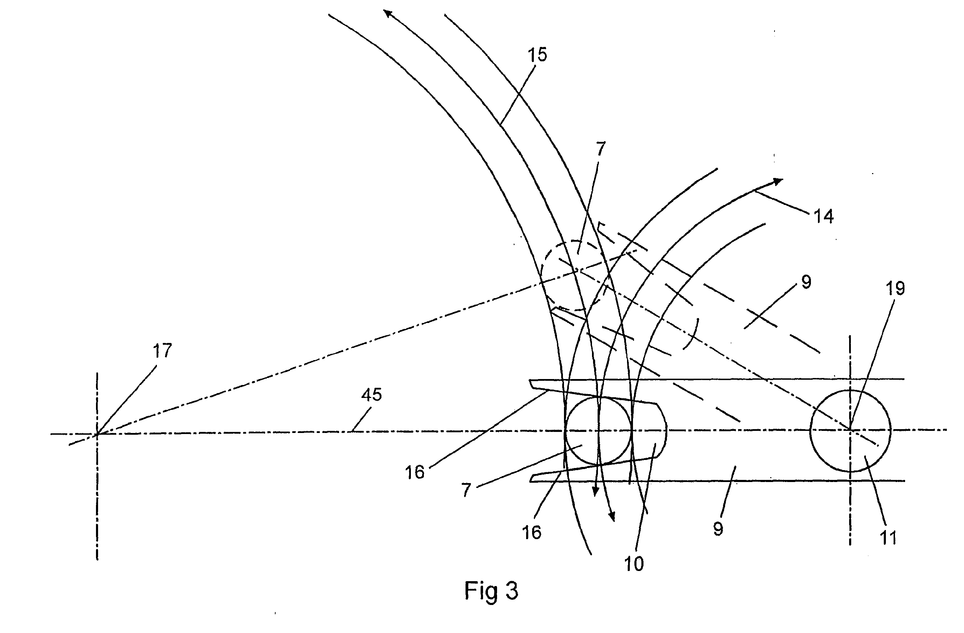

Einem jeden Türflügel 1 ist ein Haltebolzen 7 zugeordnet, der über einen Flansch 8 mit der Oberkante des Flügelrahmens 6 fest verbunden ist. Mit jedem Haltebolzen 7 wirkt, wie insbesondere auch Fig. 3 zeigt, ein Gabelarm 9 zusammen, der an dem einen Endbereich eines durch eine Bohrung 21 der Deckenkonstruktion ragenden Bolzens 11 drehfest befestigt ist. Über ein an der Deckenkonstruktion 31 angreifendes Flanschlager 40 ist der die Decke 3 durchstoßende Bolzen 11 drehbeweglich gelagert und trägt drehfest an seinem anderen Endbereich eine über eine Sicherung 13 gehaltene Gabelhalterung 25, die in ihrem einen Endbereich mit Rastflächen 42 bis 44 versehen ist; vgl. auch Fig. 2.

Dem Bolzen 11 ist ferner eine insgesamt mit MB bezeichnete Magnetbremse zugeordnet, die zwischen der Gabelhalterung 25 und der Deckenkonstruktion 31 angeordnet ist. Die Magnetbremse MB umfasst einen mit dem Bolzen 11 über eine Paßfeder 12 fest verbundenen Bremsflansch 24, eine mit der Deckenkonstruktion 31 fest verbundene Gabelbremse 22 und eine Wicklung 23; vgl. Fig.1.

Die Gabelhalterung 25 besitzt, wie Fig. 2 zeigt, an ihrer vom Bolzen 11 abgewandten Stirnseite drei um jeweils 30 ° zu einem Gabelarmdrehpunkt 19 versetzt angeordnete halbkreisförmige gekrümmte Rastflächen 42, 43 und 44, die einer quer zu ihrer Drehrichtung federnd gelagerten Rolle 28 in noch zu beschreibender Weise zugeordnet sind.

Die Rolle 28 ist mittels eines Bolzens 29 in einer Gabel 30 drehbar gelagert, die über einen in Achsrichtung federnden Stößel 27 auf einen Schalter 26 einwirken kann.

Mit dem im Flanschlager 40 der Deckenkonstruktion 31 drehbeweglich gelagerte, durch die Bohrung 21 hindurchtretenden, Bolzen 11 sind also der Gabelarm 9 und die Gabelhalterung 25 fluchtend mit einer Längsachse 45 starr verbunden, wie dies Fig. 2 zeigt.

Die Längsachse 45 ist gleichzeitig Mittellinie für die federnd gelagerte Rolle 28, so dass in der in Fig. 2 dargestellten Lage die Mittellinie der federnden Rolle 28 und die Längsachse 45 miteinander fluchten. Hierbei umfassen Gabelarme 16 den Haltebolzen 7 - vergleiche auch die Fig. 1 und 3 -, und halten, sofern die Gabelhalterung 25 in der dargestellten Lage verharrt, den Türflügel 1 in seiner in Fig. 3 angedeuteten zur Längsachse 45 ausgerichteten Lage, die der normalen Betriebslage der Karusselltür entspricht. Zur Fixierung dieser Lage wird über die Magnetbremse MB, vgl. Fig. 1, im erregten Zustand der Wicklung 23 das notwendige Haltemoment erzeugt, so dass eine Relativbewegung zwischen Bremsflansch 24 der Gabelhalterung 25 und Gabelbremse 22 verhindert ist. Damit verharrt auch der Gabelarm 9 in der zur Längsachse 45 ausgerichteten Lage und hält damit über den Haltebolzen 7 auch den damit verbundenen Türflügel 1 der Karusselltür mit einer Kraft, die durch Bemessung der Haltekraft der Magnetbremse MB bestimmbar ist und ein Bewegen des Türflügels 1 aus der Normallage, z. B. durch Windkraft, entgegenwirkt.

Im Not- und Gefahrenfall kann diese Haltekraft durch Abschalten der Magnetbremse MB aufgehoben werden, so dass durch Krafteinwirkung auf den Türflügel 1 in der einen oder anderen Richtung der Türflügel 1 aus seiner Normallage weggeschwenkt und damit ein Fluchtweg geöffnet werden kann. Hierbei wird infolge des Bewegens des Türflügels 1 in der einen oder anderen Schwenkrichtung 15 über den Haltebolzen 7 der Gabelarm 9 in der einen oder anderen Schwenkrichtung 14 gemäß Fig. 3 bewegt und die federnde Rolle 28 wird über die Rastfläche 42 oder 44 der Gabelhalterung 25 in Richtung der Längsachse 45 bewegt. Diese Bewegung dient der Betätigung des Schalters 26, dessen durch die Rastflächen 42 bis 44 definierten Schaltstellungen in der nicht dargestellten Steuerschaltung der Karusselltüranlage abgetastet und wirksam werden kann.

Darüber hinaus sichern die Rastflächen 42 und 44 das sichere Einrasten von Gabelarm 9 und Haltebolzen 7 beim Rückführen des Türflügels 1 aus der völlig ausgeschwenkten Not- und Gefahrenlage in seine zur Längsachse 45 ausgerichtete Normallage.

Selbstverständlich kann das vorstehend beschriebene Gesperre auch unterschiedlich zum vorliegenden Ausführungsbeispiel gestaltet sein, entscheidend allein ist, dass dessen Bewegungen mittels einer steuerbaren Magnetbremse MB zu unterbrechen sind.

Die vorliegende Beschreibung geht von einer Karusselltür aus, wobei die Erfindung auch auf horizontal verschiebbare Flügel einer Schiebetür mit oder ohne Seitenteile anwendbar ist.

### Bezugszeichenliste

- 1.: Türflügel
- 2.: Flügelaufhängung
- 3.: Decke
- 4.: Begrenzung
- 5.: Bürstendichtung
- 6.: Türflügelrahmen
- 7.: Haltebolzen
- 8.: Flansch
- 9.: Gabelarm
- 10.: Gabelöffnung
- 11.: Bolzen
- 12.: Paßfeder
- 13.: Sicherung
- 14.: Schwenkrichtung Gabelarm
- 15.: Schwenkrichtung Flügel
- 16.: Gabelarme
- 17.: Achse
- 18.: Flügellagerung
- 19.: Gabelarm Drehpunkt
- 20.: Lager
- 21.: Bohrung
- 22.: Gabelbremse
- 23.: Wicklung
- 24.: Bremsflansch
- 25.: Gabelhalterung
- 26.: Schalter
- 27.: Stößel
- 28.: Rolle
- 29.: Bolzen
- 30.: Gabel
- 31.: Deckenkonstruktion
- 38.: Begrenzungswand
- 40.: Flanschlager
- 42.: Rastflächen
- 43.: Rastflächen
- 44.: Rastflächen
- 45.: Längsachse
- HV: Haltevorrichtung
- MB: Magnetbremse

## Patentansprüche

1. Vorrichtung zur elektromagnetisch aktivierbaren Sicherung der Türflügel einer mindestens einflügeligen Türanlage in Flucht- und Rettungswegen gegen ungewolltes Auslenken aus der normalen Betriebslage, wobei jedem Türflügel (1) ein mittels einer Magnetbremse (MB) arretierbares drehrichtungsunabhängiges Gesperre (7, 9, 11, 25 bis 30) als steuerbares Sicherungsmittel zugeordnet ist, mit dem der Türflügel (1) automatisch in die Ausgangslage zurückführbar ist, **dadurch gekennzeichnet, dass** das Gesperre einen auf dem oberen Türflügelrahmen (6) des Türflügels (1) nahe dem einer Begrenzungswand (38) zugewandten Ende des Türflügels (1) angeordneten Haltebolzen (7), einen schwenkbar gelagerten mit dem Haltebolzen (7) aus und in Wirkverbindung bringbaren Gabelarm (9) und eine mit dem Gabelarm (9) synchron schwenkbare mit Rastgliedern (27 bis 30) zusammenwirkende Gabelhalterung (25) umfaßt, wobei Gabelarm (9) und Gabelhalterung (25) auf einen drehbeweglich gelagerten Bolzen (11) befestigt sind, der einen Teil der Magnetbremse (MB) bildenden Bremsflansch (24) trägt.

2. Vorrichtung nach Anspruch 1, **dadurch gekennzeichnet, dass** das Teil (9) einen bei der Auslenkung aus der normalen Betriebslage aufladbaren elektrischen, mechanischen, pneumatischen oder hydraulischen Speicher aufweist.

3. Vorrichtung nach Anspruch 1, **dadurch gekennzeichnet, dass** die Kraft der Magnetbremse (MB) stufenlos verstellbar ist.

4. Vorrichtung nach den Ansprüchen 1, **dadurch gekennzeichnet, dass** die Magnetbremse (MB) auf der Oberseite einer mit der Türanlage verbundenen Deckenkonstruktion (31) und das Flanschlager (40) des Bolzen (11) auf der Unterseite der Deckenkonstruktion (31) befestigt sind, die an dieser Stelle einen den Durchtritt des Bolzens (11) ermöglichende Öffnung (21) aufweist.

5. Vorrichtung nach den Ansprüchen 1 bis 4, **dadurch** gekennzeich-net, dass den Rastgliedern (27 bis 30) ein deren mittels Rastflächen (42, 43, 44) tragenden Schaltscheibe (Gabelhalterung 25) verkörpernden Schaltstellungen abtastender Schalter (26) als Teil einer die Türanlage steuernden Schaltungsanordnung zugeordnet ist.

6. Vorrichtung nach Anspruch 1 bis 5, **dadurch gekennzeichnet, dass** die Schaltscheibe drei um 30 ° gegeneinander versetzt angeordnete Rastflächen (42, 43, 44) aufweist, von denen die mittlere Rastfläche (43) mit einer Längsachse (45), fluchtet, die Bolzen (11), Gabelarm (9) und nockenabtastende Rolle (28) mittig schneidet.

7. Vorrichtung nach den Ansprüchen 1 bis 6, **dadurch gekennzeichnet, dass** der Gabelarm (9) an seinem freien Ende eine nach außen sich erweiternde, Haltebolzen (7) etwa in ihrer Mitte haltende Gabelöffnung (10) aufweist.

8. Vorrichtung nach den vorhergehenden Ansprüchen, **dadurch gekennzeichnet, dass** die Türanlage eine radial zu zylindersegmentförmigen Begrenzungswänden drehbar angeordnete Karusselltür aufweist.

9. Vorrichtung nach den vorhergehenden Ansprüchen, **dadurch gekennzeichnet, dass** die Türanlage horizontal bewegbare Schiebeelemente aufweist.

## Claims

1. An apparatus for electromagnetically activating a securing of the door leaves of a door installation having at least one leaf, which is installed in emergency and escape routes, against unintentional deflection out of the regular operating position, a locking mechanism (7, 9, 11, 25 to 30), independent from the rotational direction, as a controllable securing means, which can be locked in place by means of a magnetic brake (MB), being associated to each door leaf (1), by means of which the door leaf (1) can be automatically guided back into the initial position, **characterized in that** the locking mechanism comprises a retaining bolt (7), which is disposed on the upper door leaf frame (6) of the door leaf (1) in the vicinity of the end of the door leaf (1) facing a delimiting wall (38), a pivotably supported fork arm (9), which can be brought out of and into an operable connection with the retaining bolt (7), and a fork mount (25), which is synchronously pivotable with the fork arm (9) and able to cooperate with latching members (27 to 30), the fork arm (9) and the fork mount (25) being attached to a rotatably supported bolt (11), which carries a brake flange (24) forming part of the magnetic brake (MB).

2. An apparatus according to claim 1, **characterized in that** the part (9) has an electrical, mechanical, pneumatic or hydraulic accumulator, which can be charged during the deflection out of the regular operating position.

3. An apparatus according to claim 1, **characterized in that** the force of the magnetic brake (MB) is continuously adjustable.

4. An apparatus according to claim 1, **characterized in that** the magnetic brake (MB) is attached to the top side of a ceiling structure (31), which is connected to the door installation, and the flange bearing (40) of the bolt (11) is connected to the bottom side of the ceiling structure (31), which has an opening (21) at this location allowing the bolt (11) to pass through.

5. An apparatus according to the claims 1 to 4, **characterized in that** a sensing switch (26), as part of the switching arrangement controlling the door installation, is associated to the latching members (27 to 30), which switch senses the switching positions by means of a switching disc (fork mount 25) bearing latching surfaces (42, 43, 44) representing these switching positions.

6. An apparatus according to claim 1 to 5, **characterized in that** the switching disc has three latching surfaces (42, 43, 44), which are disposed offset to each other by 30°, the central latching surface (43) thereof being aligned with a longitudinal axis (45), which centrally intersects the bolt (11), the fork arm (9) and the cam sensing roller (28).

7. An apparatus according to the claims 1 to 6, **characterized in that** the fork arm (9), at its free end, has a fork opening (10) widening to the outside and holding, approximately in its centre, a retaining bolt (7).

8. An apparatus according to the preceding claims, **characterized in that** the door installation has a revolving door, which is radially rotatably disposed towards the cylinder-segment shaped delimiting walls.

9. An apparatus according to the preceding claims, **characterized in that** the door installation has horizontally movable sliding panels.

## Revendications

1. Dispositif apte à activer électromagnétiquement une protection des vantaux de porte d'une installation de portes, qui a au moins un vantail situé dans des issues de secours et de sauvetage contre la déflexion involontaire en dehors de la position de service normale, un mécanisme de blocage (7, 9 ,11, 25 à 30), en tant que moyen de protection contrôlable, qui est indépendant du sens de rotation et verrouillable au moyen d'un frein magnétique (MB), étant associé à chaque vantail de porte (1), par l'intermédiaire duquel le vantail de porte (1) peut être automatiquement reconduit dans sa position initiale, **caractérisé en ce que** le mécanisme de blocage comprend un boulon de retenue (7), qui est agencé sur le cadre supérieur de vantail de porte (6) du vantail de porte (1) près de l'extrémité du vantail de porte (1) orientée vers un mur limiteur (38), un bras de fourche (9), qui est supporté de façon pivotable et peut sortir d'une et entrer en une connexion active avec le boulon de retenue (7), et une fixation de fourche (25), pivotant de façon synchronisée avec le bras de fourche (9) et coopérant avec des membres d'enclenchement (27 à 30), le bras de fourche (9) et la fixation de fourche (25) étant fixés sur un boulon (11) qui est supporté de façon mobile en rotation et porte une bride de frein (24) formant partie du frein magnétique (MB).

2. Dispositif selon la revendication 1, **caractérisé en ce que** l'élément (9) présente un accumulateur électrique, mécanique, pneumatique ou hydraulique, qui peut être chargé pendant la déflexion en dehors de la position de service normale.

3. Dispositif selon la revendication 1, **caractérisé en ce que** la force du frein magnétique (MB) peut être réglée en continu.

4. Dispositif selon la revendication 1, **caractérisé en ce que** le frein magnétique (MB) est fixé sur la face supérieure d'une structure de plafond (31), qui est connectée à l'installation de portes, et que le palier à bride (40) du boulon (11) est fixé sur la face inférieure de la structure de plafond (31), qui, à cet endroit, présente une ouverture (21) pour permettre le passage du boulon (11).

5. Dispositif selon les revendications 1 à 4, **caractérisé en ce qu'**un commutateur (26), faisant partie d'un système de commande contrôlant l'installation de portes, est associé aux membres d'enclenchement (27 à 30), lequel commutateur balaye les positions de commutation par l'intermédiaire d'un disque de commutation (fixation à fourchette 25) portant des surfaces d'enclenchement (42, 43, 44) qui représentent lesdites positions de commutation.

6. Dispositif selon la revendication 1 à 5, **caractérisé en ce que** le disc de commutation présente trois surfaces d'enclenchement (42, 43, 44) disposées de façon décalée les unes des autres de 30°, dont la surface centrale d'enclenchement (43) est alignée avec un axe longitudinal (45) qui traverse centralement le boulon (11), le bras de fourche (9) et le galet (28) balayant les cames.

7. Dispositif selon les revendications 1 à 6, **caractérisé en ce que**, sur son extrémité libre, le bras de fourche (9) présente une ouverture de fourche (10) s'élargissant vers l'extérieur qui retient le boulon de retenue (7) approximativement dans son centre.

8. Dispositif selon les revendications précédentes, **caractérisé en ce que** l'installation de portes présente une porte tambour disposée de façon à pouvoir tourner radialement en direction des murs limiteurs ayant une forme de segments cylindriques.

9. Dispositif selon les revendications précédentes, **caractérisé en ce que** l'installation de portes présente des panneaux coulissants qui sont horizontalement déplaçables.
